# EUROPÄISCHE PATENTSCHRIFT

(11) **EP 1 722 124 B1**
(45) Veröffentlichungstag und Bekanntmachung des Hinweises auf die Patenterteilung: **03.10.2007**
(21) Anmeldenummer: 05010322.5
(22) Anmeldetag: 12.05.2005
(51) Int. Cl.: F16F 1/38

(54) **Lager, insbesondere Gummilager**
Bearing, especially rubber bearing
Support, notamment en caoutchouc

(43) Veröffentlichungstag der Anmeldung: 15.11.2006
(73) Patentinhaber: Stabitec Stanz-Biegetechnik GmbH, 42489 Wülfrath (DE)
(72) Erfinder: Seilheimer, Joachim, 42657 Solingen (DE)
(74) Vertreter: Nunnenkamp, Jörg

(56) Entgegenhaltungen:
- DE-A1- 19 650 299
- DE-U1- 20 315 477
- FR-A- 753 892
- PATENT ABSTRACTS OF JAPAN Bd. 014, Nr. 127 (M-0947), 9. März 1990 (1990-03-09) & JP 01 320332 A (BRIDGESTONE CORP; others: 01), 26. Dezember 1989 (1989-12-26)

## Beschreibung

Die Erfindung betrifft ein Lager, insbesondere Gummilager, mit wenigstens einer Lagerbuchse und einem von der Lagerbuchse umschlossenen Gummikörper, wobei die Lagerbuchse zumindest eine Längstrennlinie mit an jeweils benachbarten Längskanten vorgesehenen Kantenprofilen aufweist, deren Zinken respektive Zinkenausnehmung ineinander greifen. - Oblicherweise sind mehrere Zinken und Zinkenausnehmungen realisiert,

Ein solches Lager wird in der DE 100 49 611 C2 oder auch dem Gebrauchsmuster DE 203 15 477 U1 beschrieben. Dabei kommt im letztgenannten Fall als Lagerbuchse ein Vulkanisationsträger zum Einsatz, welcher aus einem zu einer Rohrschale gebogenen Metallstreifen gefertigt wird. Tatsächlich sind eine innere Schale und eine äußere Schale realisiert, die nach bevorzugter Ausführungsform durch Verprägen miteinander verbunden werden.

Das Lager entsprechend der DE 203 15 477 U1 hat sich bewährt, stößt jedoch in der Praxis auf Probleme. Denn durch die Verprägung der beiden Schalen miteinander wird der von der Lagerbuchse umschlossene Gummikörper in dem Bereich der Prägungen geschwächt. Das gilt besonders dann, wenn dieser Gummikörper tordierende Bewegungen aufnehmen soll, die zu Rissen bzw. Schwächungen des Gummikörpers führen können. Hier setzt die Erfindung ein.

Der Erfindung, liegt das technische Problem zugrunde, ein Lager der eingangs beschriebenen Ausführungsform so weiter zu entwickeln, dass eine einfache Fertigung erreicht wird und Beschädigungen des Gummikörpers über die gesamte Laufzeit gesehen, ausgeschlossen sind.

Zur Lösung dieser technischen Problemstellung schlägt die Erfindung bei einem gattungsgemäßen Lager, insbesondere Gummilager, vor, dass der jeweilige Zinken an der eine Längskante im Zuge der Herstellung der Lagerbuchse im Wesentlichen in Umfangsrichtung der Lagerbuchse in eine zugehörige Zinkenausnehmung an der anderen Längskante eintaucht und hierbei um ein vorgegebenes Maß plastisch - und nicht elastisch - verformt wird. Auf diese Weise verkeilen sich Zinken und zugehörige Zinkenausnehmung dauerhaft ineinander.

Dadurch kann die betreffende Lagerbuchse problemlos zweischalig mit innerer Schale und äußerer Schale ausgeführt werden, wobei die beiden Schalen mit zumindest einer inneren Längstrennlinie und einer äußeren Längstrennlinie ausgerüstet sind. Wenn nun diese beiden Längstrennlinien in Radialrichtung nicht überlappend zueinander angeordnet sind und die beiden Schalen in der Weise eine Verbindung miteinander eingehen, dass die jeweiligen Zinken an der einen Längskante in zugehörige Zinkenausnehmungen an der anderen Längskante der jeweiligen Schale eingreifen, wird unmittelbar eine form- und/oder kraftschlüssige Kopplung beider Schalen erreicht. Dazu ist es lediglich erforderlich, die äußere Schale im Zuge der Verbindung von Zinken und Zinkenausnehmungen so weit in ihrem Durchmesser zu verringern, dass die zuvor hergestellte innere Schale fest umschlossen wird und beide Schalen gleichsam ineinander "fließen". Denn dadurch wird eine dauerhafte plastische Verbindung beider Schalen mit definiertem Innendurchmesser der Lagerbuchse zur Aufnahme des Gummikörpers zur Verfügung gestellt.

Es ist also nicht erforderlich, die beiden Schalen zusätzlich noch einmal zu verprägen, zu verschweißen oder auch zu verkleben. Denn die erfindungsgemäße Verbindung zwischen dem jeweiligen Zinken und der zugehörigen Zinkenausnehmung im Sinne einer plastischen Verkeilung oder eines Verkrallens sorgt dafür, dass die Schale den gewünschten Außendurchmesser einnimmt bzw. die beiden Schalen einwandfrei miteinander gekoppelt werden.

Dabei können sich an jedem Kantenprofil Zinken und Zinkenausnehmung nebeneinander - auch paarweise - abwechseln, so dass entlang der Längstrennlinie jeweils die Zinke bzw. der Zinken des einen Kantenprofils in die Zinkenausnehmung des anderen Kantenprofils eintaucht, und umgekehrt. Es sollte betont werden, dass üblicherweise mehrere Zinken und mehrere Zinkenausnehmungen an jedem Kantenprofil realisiert sind, wenngleich die Erfindung selbstverständlich auch Ausführungsformen umfasst, die nur mit einem Zinken und einer Zinkenausnehmung je Kantenprofil ausgerüstet sind.

Um den beschriebenen Prozess des Verkeilens von Zinken und Zinkenausnehmung zu unterstützen, ist das eine Kantenprofil mit Stegzinken ausgerüstet, während das andere Kantenprofil Schwalbenschwanzzinken aufweist. Dabei tauchen die Stegzinken in der Regel in gegenüber der Umfangsrichtung schräg verlaufende Stegzinkenaufnahmen ein, während die Schwalbenschwanzzinken mit U-förmigen Zinkenaufnahmen wechselwirken.

Wenn folglich die Stegzinken in die schräg verlaufenden Stegzinkenaufnahmen eintauchen, werden sie bei diesem Vorgang schräg abgelenkt, so dass automatisch eine Verkeilung zwischen Stegzinken und Stegzinkenaufnahme stattfindet. Denn die Breite des Stegzinkens entspricht im Wesentlichen der Breite der Stegzinkenaufnahme und der Stegzinken wird bei dem beschriebenen Vorgang plastisch verformt.

Ähnliches geschieht, wenn der jeweilige Schwalbenschwanzzinken mit der U-förmigen Zinkenaufnahme wechselwirkt. In diesem Fall ist der Kopf des Schwalbenschwanzzinkens geringfügig breiter als die U-förmige Zinkenaufnahme ausgebildet, so dass beim Eintauchen des Schwalbenschwanzzinkens in die U-förmige Zinkenaufnahme der betreffende Kopf in Richtung auf den Fuß des Schwalbenschwanzzinkes verdrängt wird und hierdurch der gewünschte Verkeilungseffekt in der U-förmigen Zinkenaufnahme stattfindet. Dabei sind die Zinken jeweils mit abgerundeten Köpfen ausgerüstet, um ihr schiebendes Ineinandertauchen beim Pressvorgang in Umfangsrichtung der Lagerbuchse zu begünstigen bzw. zu gewährleisten, so dass die Ränder von einerseits dem Zinken und andererseits der Zinkenaufnahme aneinander entlanggleiten können.

Es hat sich bewährt, wenn die Lagerbuchse als streifenartiger Vulkanisationsträger ausgebildet ist. Das heißt, bei der Lagerbuchse handelt es sich nach bevorzugter Ausführungsform um einen (Metall-) Streifen, auf den in der Regel nach seiner Umformung zur Lagerbuchse bzw. Rohrschale der Gummikörper aufvulkanisiert wird. Dazu mag der streifenförmige Vulkanisationsträger bzw. der die Lagerbuchse definierende Metallstreifen auf seiner dem Gummikörper zugewandten Seite eine Beschichtung aufweisen. Bei dieser Beschichtung kann es sich nicht einschränkend um eine Grundierung, einen Klebstoff oder dergleichen handeln, welcher die Haftung des anschließend auf- bzw. eingespritzten Elastomers zur Darstellung des Gummikörpers im Innern der Lagerbuchse begünstigt.

Dieser Vorgang wird noch dadurch erleichtert, wenn die Lagerbuchse zunächst auf ein bestimmtes Durchmessermaß vorverpresst wird und erst anschließend eine Endverpressung erfährt. Denn durch diese Vorgehensweise kann auf die vorverpresste Lagerbuchse der Gummikörper unmittelbar aufgebracht werden, während im Zuge der Endverpressung die Härte des Gummikörpers eingestellt und an die Anforderungen angepasst wird. Tatsächlich kann durch den Grad der Verpressüng des Gummikörpers dessen Federkennlinie so beeinflusst werden, dass diese mit einer größeren Federkonstante einhergeht, also "härter" ist.

Dabei wird die beschriebene Vorverpressung so vorgenommen, dass die jeweiligen Zinken respektive Zinkenausnehmungen ineinandergreifen, und zwar um ein vorgegebenes Maß, welches zu einer bestimmten Durchmesserverringerung der solchermaßen gebildeten Rohrschale bzw. Lagerbuchse korrespondiert. Dieser Durchmesser kann nun noch weiter verringert werden, indem die Rohrschale im Zuge der Endverpressung zusätzlich umfangsseitig beaufschlagt wird, so dass sowohl die Stegzinken als auch die Schwalbenschwanzzinken jeweils bis zum Grund einerseits der Stegzinkenaufnahme und andererseits der U-förmigen Zinkenaufnahme gelangen, welchen sie im Rahmen der Vorverpressung noch nicht erreicht haben.

Das beschriebene Lager kann nicht einschränkend bei Kraftfahrzeugen, d. h. im automobilen Bereich und hier beispielsweise als Schwingungsdämpfer oder bei Fahrwerkskomponenten der Lenkung zum Einsatz kommen. Auch die Verwendung im Bereich der Achse als Anschlagpuffer, Kardanwellenaufhängung, Motoraufhängung etc. ist denkbar. Ebenso lassen sich solche Lager im Haushaltsbereich bei beispielsweise Wasch- und Spülmaschinen sowie Trocknern einsetzen.

Von besonderer Bedeutung ist schließlich, dass die Kantenprofile mit sich wechselweise überlappenden Zungen ausgerüstet sind. Auf diese Weise wird sichergestellt, dass die hergestellte Rohrschale bzw. Lagerbuchse mit den ineinander greifenden Zinken und Zinkenausnehmungen nicht durch beispielsweise anschließende Bearbeitungsschritte aufgebogen wird bzw. an der Längstrennlinie eine Öffnung erfährt. Dabei lassen sich die jeweiligen Zungen durch einen einfachen Prägevorgang realisieren. Als Werkstoff für das Lager empfiehlt die Erfindung die Verwendung von Alu, Stahl oder rostfreiem Stahl, wenngleich andere metallische Werkstoffe oder Kunststoffe natürlich nicht ausgeschlossen sind. Auch Werkstoffkombinationen können verwirklicht werden, wenn beispielsweise mit einer inneren Schale und einer äußeren Schale gearbeitet wird.

In diesem Fall empfiehlt es sich ferner, die innere Schale und die äußere Schale ggf. im Bereich ihrer Kontaktfläche zu versiegeln, um das Eindringen von Feuchtigkeit, Schmutz etc. zu vermeiden. Meist ist jedoch eine solche Versiegelung nicht erforderlich, weil die beiden Schalen durch den beschriebenen Verformungsprozess gleichsam ineinander fließen und spaltfrei aneinander anschließen.

Im Ergebnis überzeugt das erfindungsgemäße Lager durch eine einfache Herstellung, weil es lediglich erforderlich ist, zumindest einen Metallstreifen endseitig mit den komplementären Kantenprofilen auszurüsten und dann im Sinne einer Rohrschale zu biegen, so dass die Zinken respektive Zinkenausnehmungen in Umfangsrichtung ineinandergreifen können. Sofern nach bevorzugter Ausführungsform zwei Metallstreifen Verwendung finden, um eine innere Schale und eine äußere Schale der Lagerbuchse zu definieren, ist es nicht erforderlich, diese beiden Schalen zusätzlich miteinander mechanisch zu verbinden. Vielmehr stellt die mit der Durchmesserverringerung einhergehende zunehmende Verkeilung der Zinken respektive Zinkenausnehmungen an den komplementären Kantenprofilen sicher, dass die beiden Schalen mit in Radialrichtung nicht überlappend zueinander angeordneten Längstrennlinien gleichsam aufeinandergepresst werden und eine innige Verbindung ohne Zusatzmaßnahmen eingehen.

Dadurch können insbesondere Verprägungen vermieden werden, so dass die innere Schale auf ihrer dem Gummikörper zugewandten Innenfläche glatt ausgeführt ist und folglich Beschädigungen des Gummikörpers ausgeschlossen werden können. Darin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: das erfindungsgemäße Lager in schematischer Perspektivansicht,
- Fig. 2: den Gegenstand nach Fig. 1 in einer Frontansicht,
- Fig. 3: eine einzelne Rohrschale bzw. den zu ihrer Herstellung notwendigen Blechstreifen in ungebogenem Zustand,
- Fig. 4: den Bereich einer Längstrennlinie der jeweiligen Rohrschale in nicht verpresstem Zustand und
- Fig. 5: den Bereich der Längstrennlinie bei einer abgewandelten Ausführungsform in Aufsicht und teilweise im Querschnitt.

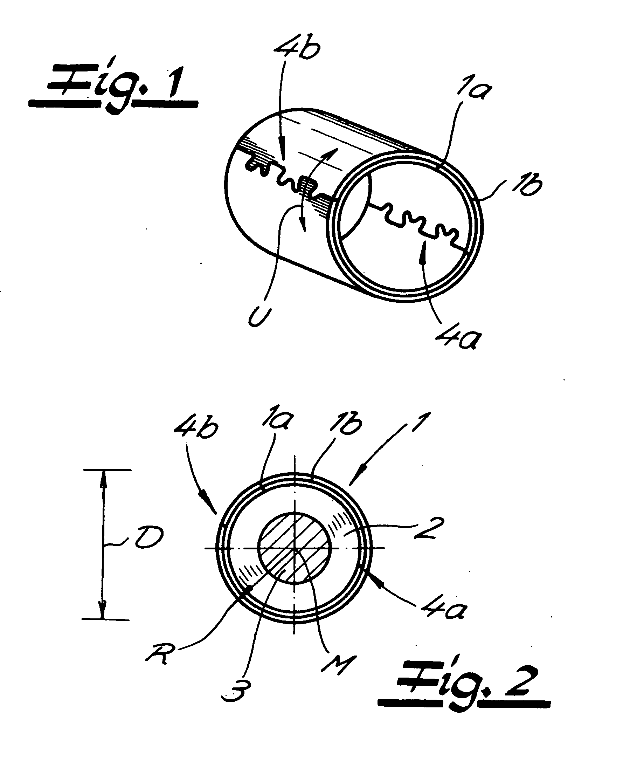

In den Figuren ist ein Lager, nach dem Ausführungsbeispiel ein Gummilager dargestellt. Dieses verfügt ausweislich der Fig. 2 über eine Lagerbuchse 1, die nicht einschränkend als Vulkanisationsträger 1 ausgebildet ist. Mit Hilfe der Lagerbuchse 1 wird das Lager versteift und/oder in einer Lageraufnahme, einem Lagerauge etc. befestigt. Im Rahmen des Ausführungsbeispiels sorgt die Lagerbuchse 1 dafür, dass ein in ihrem Inneren vorgesehener und lediglich angedeuteter Gummikörper 2 aus einem elastomeren Kunststoff einen Profilstab 3 dämpfend umschließt. Bei diesem Profilstab 3 mag es sich nicht einschränkend um einen Lenker einer Achslagerung handeln.

Anhand der Fig. 1 erkennt man am besten, dass die Lagerbuchse 1 über jeweils zwei Längstrennlinien 4a, 4b verfügt. Man sieht, dass beide Längstrennlinien 4a, 4b an jeweils benachbarten Längskanten mit einem jeweils komplementären Kantenprofil 5, 6 ausgerüstet sind. Jedes Kantenprofil 5, 6 verfügt über ineinandergreifende Zinken 5a, 6a sowie zugehörige Zinkenausnehmungen 5b, 6b.

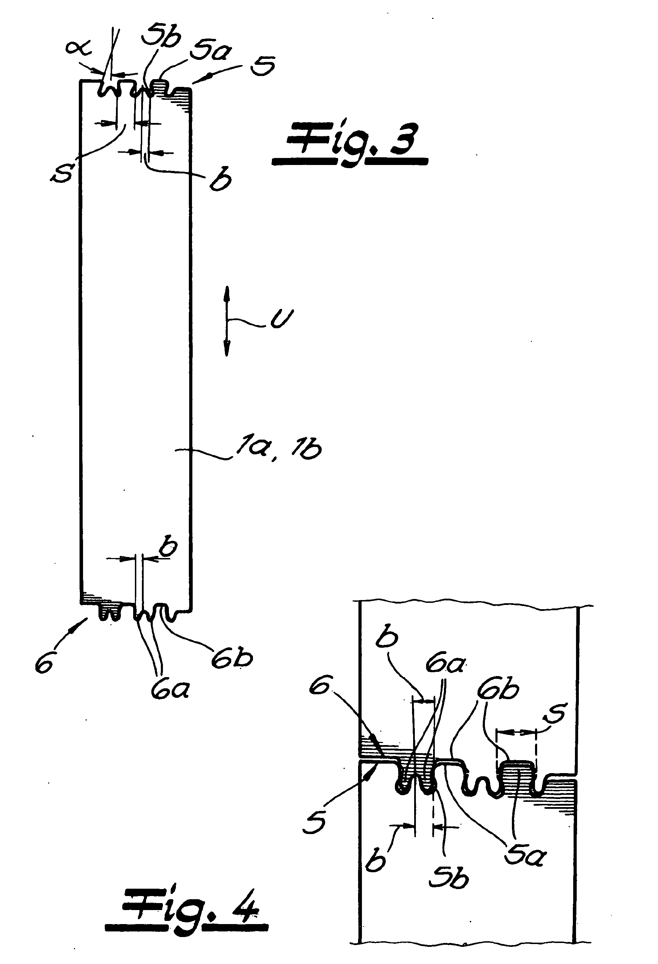

Tatsächlich können im Rahmen der Darstellung Stegzinken 6a von Schwalbenschwanzzinken 5a unterschieden werden. Zu den Stegzinken 6a korrespondieren Stegzinkenaufnahmen 5b während die Schwalbenschwanzzinken 5a mit U-förmigen Zinkenausnehmungen 6b wechselwirken. Die Zinken 5a sowie 6a und die Zinkenausnehmungen 5b und 6b liegen jeweils am jeweiligen Kantenprofil 5, 6 nebeneinander und wechseln sich (ggf. paarweise) ab, wie man anhand der Fig. 3 erkennt. Auf diese Weise tauchen entlang der jeweiligen Längstrennlinie 4a, 4b jeweils Zinken 5a des einen Kantenprofils 5 in Zinkenausnehmungen 6b des anderen Kantenprofils 6 ein und umgekehrt. D.h., die Zinken 6a des anderen Kantenprofils 6 wirken mit den Zinkenaufnahmen 5b des einen Kantenprofils 5 zusammen.

Anhand der Fig. 1, 2 und 4 erkennt man, dass der jeweilige Zinken 5a, 6a an der einen Längskante im Zuge der Herstellung der Lagerbuchse 1 im Wesentlichen in Umfangsrichtung U der Lagerbuchse 1 in die zugehörige Zinkenausnehmung 6b respektive 5b an der anderen Längskante eintaucht und hierbei um ein vorgegebenes Maß plastisch verformt wird. Dadurch verkeilen sich die Zinken 5a, 6a und die Zinkenausnehmungen 6b, 5b ineinander.

Tatsächlich verfügen die Zinken 5a, 6a über jeweils abgerundete Köpfe, wobei die Breite b der Stegzinken 6a an die Breite b der zugehörigen Stegzinkenausnehmungen 5b angepasst ist. Dadurch, dass die zugehörige Stegzinkenausnehmung 5b für den Stegzinken 6a gegenüber der Umfangsrichtung U geringfügig schräg verläuft (vgl. Winkel α in Fig. 3) und die Breite b des Stegzinkens 6a derjenigen der Stegzinkenausnehmung 5b entspricht, kann der Stegzinken 6a in die Stegzinkenausnehmung 5b eintauchen, wird allerdings mit zunehmendem Eintauchweg entlang der Umfangsrichtung U verformt bzw. entlang des Winkels a abgelenkt. D. h., der Stegzinken 6a wird beim Eintauchen in die zugehörige Stegzinkenausnehmung 5b plastisch verformt und verkeilt sich mit zunehmendem Eintauchen in der Stegzinkenausnehmung 5b.

Vergleichbares geschieht mit den jeweiligen Schwalbenschwanzzinken 5a. Denn deren Kopf weist eine Breite s auf, die die Breite der U-förmigen Zinkenausnehmung 6b übersteigt. Dadurch wird der verbreiterte Kopf des Schwalbenschwanzzinkens 5a zunehmend in Richtung auf den Fuß des Schwalbenschwanzzinkens 5a verdrängt und sorgt für die gewünschte Keilwirkung zwischen dem Schwalbenschwanzzinken 5a und der U-förmigen Zinkenausnehmung 6b. Das erkennt man beim Vergleich der Fig. 4, welche die komplementären Zinken 5a, 6a in unverformtem Zustand darstellt im Vergleich zu Fig. 1, die die fertig verpresste Lagerbuchse 1 zeigt.

Tatsächlich verfügt die Lagerbuchse 1 über zwei Rohrschalen bzw. Schalen 1a, 1 b, die jeweils aus einem Metallstreifen aus beispielsweise Stahl oder Aluminium hergestellt sind, wie in der Fig. 3 gezeigt ist. Dabei wird zunächst die innere Schale bzw. Rohrschale 1a produziert und dann in die äußere Schale bzw. Rohrschale 1b eingesetzt. Bei diesem Vorgang werden die beiden zugehörigen Längstrennlinien 4a, 4b in Radialrichtung R nicht überlappend zueinander angeordnet. D. h., ausgehend von einem Mittelpunkt M der Lagerbuchse 1 wird in der besagten Radialrichtung R entweder nur die eine Längstrennlinie 4a oder nur die andere Längstrennlinie 4b geschnitten. Keinesfalls können also beide Längstrennlinien 4a, 4b entlang der Radialrichtung R gleichsam hintereinander angeordnet sein.

Dabei hat es sich besonders bewährt, wenn die innere Längstrennlinie 4a und die äußere Längstrennlinie 4b gegenüberliegend (in Bezug auf den Mittelpunkt M) platziert sind, wie dies in der Fig. 1 angedeutet ist. Die beiden Rohrschalen 1 a, 1b sind dadurch miteinander verbunden, dass beide zugehörigen Metallstreifen durch eine jeweilige Verringerung ihres Durchmessers miteinander verpresst werden. Bei diesem Vorgang tauchen die jeweiligen Zinken 5a, 6a zunehmend in die korrespondierende Zinkenausnehmung 5b, 6b ein.

Dieser Vorgang kann abschnittsweise erfolgen, indem die Lagerbuchse 1 zunächst auf ein bestimmtes Durchmessermaß vorverpresst und danach endverpresst wird. In vorverpresstem Zustand wird üblicherweise der Gummikörper 2 auf die innere Schale 1a aufvulkanisiert. In diesem Fall sind die Zinken 5a, 6a noch nicht vollständig in die zugehörigen Zinkenausnehmungen 5b, 6b eingetaucht. Das geschieht erst im Zuge der Endverpressung. Auf diese Weise kann gleichzeitig die "Härte" des Gummikörpers 2 eingestellt werden, nämlich indem der Durchmesser D der Lagerbuchse 1 insgesamt zwischen dem vorverpressten und dem endverpressten Zustand eine gewünschte Variation erfährt.

Je geringer der Durchmesser D der Lagerbuchse 1 im endverpressten Zustand eingestellt wird, um so härter ist in der Regel der Gummikörper 2 in seinem Innern bei der Dämpfung des Profilstabes 3 abgestimmt.

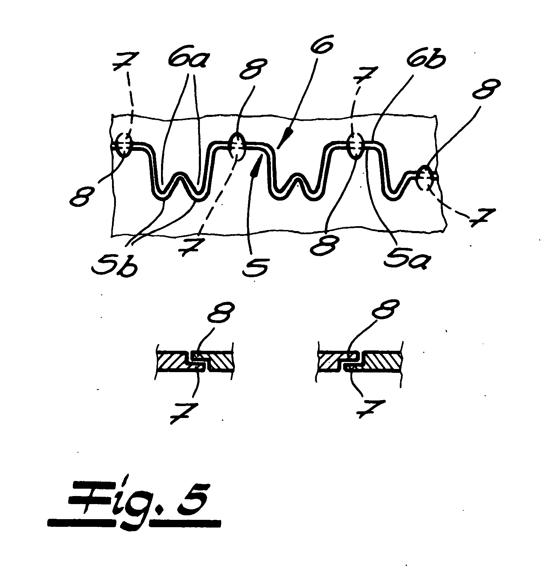

Die Fig. 5 zeigt eine abgewandelte Ausführungsform, bei welcher an den Kantenprofilen 5, 6 neben den Zinken 5a, 6a und zugehörigen Zinkenausnehmungen 5b, 6b zusätzlich Zungen 7, 8 realisiert sind, die sich wechselweise überlappen. Die jeweiligen Zungen 7, 8 werden durch einen Prägevorgang oder geeignete Maßnahmen am jeweiligen Kantenprofil 5, 6 realisiert Dabei übergreift jeweils die Zunge 8 die darunter liegende Zunge 7. Man erkennt, dass sich am Kantenprofil 5 jeweils oben liegende Zungen 8 und unten liegende Zungen 7 abwechseln. Das zugehörige Kantenprofil 6 verfügt über eine entsprechende komplementäre Gestaltung, wie die Schnittdarstellung in der Fig. 5 deutlich macht. Auf diese Weise wird verhindert, dass die jeweilige innere Schale 1a und insbesondere die äußere Schale 1b im Bereich der zugehörigen Längstrennlinie 4a, 4b aufbiegen kann. Im Rahmen des Ausführungsbeispiels sind die wechselweise ineinander greifenden Zungen 7, 8 an den Kantenprofilen 5, 6 jeweils im Bereich der Schwalbenschwanzzinken 5a und der zugehörigen U-förmigen Zinkenausnehmungen 6b vorgesehen, was allerdings nicht zwingend ist.

## Patentansprüche

1. Lager, insbesondere Gummilager, mit wenigstens einer Lagerbuchse (1) und einem von der Lagerbuchse (1) umschlossenen Gummikörper (2), wobei die Lagerbuchse (1) zumindest eine Längstrennlinie (4a, 4b) mit an jeweils benachbarten Längskanten vorgesehenen Kantenprofilen (5, 6) aufweist, deren Zinken (5a, 6a) respektive Zinkenausnehmung (5b, 6b) ineinander greifen, **dadurch gekennzeichnet, dass** der jeweilige Zinken (5a, 6a) an der einen Längskante im Zuge der Herstellung in eine zugehörige Zinkenausnehmung (5b, 6b) an der anderen Längskante eintaucht und hierbei um ein vorgegebenes Maß plastisch verformt wird.

2. Lager nach Anspruch 1, **dadurch gekennzeichnet, dass** sich an jedem Kantenprofil (5, 6) Zinken (5a, 6a) und Zinkenausnehmungen (5b, 6b) nebeneinander, ggf. paarweise abwechseln, so dass entlang der Längstrennlinie (4a, 4b) jeweils Zinken (5a, 6a) des einen Kantenprofils (5; 6) in Zinkenausnehmungen (5b, 6b) des anderen Kantenprofils (5, 6) eintauchen und umgekehrt.

3. Lager nach Anspruch 1 oder 2, **dadurch gekennzeichnet, dass** das eine Kantenprofil (6) mit Stegzinken (6a) ausgerüstet ist, während das andere Kantenprofil (5) Schwalbenschwanzzinken (5a) aufweist.

4. Lager nach einem der Ansprüche 1 bis 3, **dadurch gekennzeichnet, dass** die Stegzinken (6a) in gegenüber der Umfangsrichtung (U) schräg verlaufende Stegzinkenausnehmungen (5b) eintauchen.

5. Lager nach einem der Ansprüche 1 bis 4, **dadurch gekennzeichnet, dass** die Schwalbenschwanzzinken (5a) mit U-förmigen Zinkenausnehmungen (6b) wechselwirken.

6. Lager nach einem der Ansprüche 1 bis 5, **dadurch gekennzeichnet, dass** die Zinken (5a, 6a) jeweils abgerundete Köpfe aufweisen.

7. Lager nach einem der Ansprüche 1 bis 6, **dadurch gekennzeichnet, dass** die Lagerbuchse (1) zweischalig mit innerer Schale (1a) und äußerer Schale (1b) ausgeführt ist, wobei die beiden korrespondierenden Längstrennlinien (4a, 4b) in Radialrichtung (R) nicht überlappend zueinander angeordnet sind.

8. Lager nach einem der Ansprüche 1 bis 7, **dadurch gekennzeichnet, dass** die Lagerbuchse (1) an ihrer dem Gummikörper (2) zugewandten Seite mit einer Beschichtung ausgerüstet ist.

9. Lager nach einem der Ansprüche 1 bis 8, **dadurch gekennzeichnet, dass** die Lagerbuchse (1) zunächst auf ein bestimmtes Durchmessermaß vorverpresst und danach endverpresst wird.

10. Lager nach einem der Ansprüche 1 bis 9, **dadurch gekennzeichnet, dass** die Kantenprofile (5, 6) mit sich wechselweise überlappenden Zungen (7, 8) ausgerüstet sind.

## Claims

1. A bearing, in particular a rubber bearing, with at least one bearing bush (1) and a rubber body (2) surrounding the bearing bush (1), wherein the bearing bush (1) comprises at least one longitudinal separating line (4a, 4b) with edge profiles (5, 6) provided in each case at adjacent longitudinal edges, whereof the prongs (5a, 6a) and, respectively, the prong recess (5b, 6b) engage into one another, **characterised in that** the respective prong (5a, 6a) at the one longitude edge dips in the course of production into the respective prong recess (5b, 6b) at the other longitude edge and is thereby plastically deformed to a predetermined extent.

2. The bearing according to claim 1, **characterised in that** prongs (5a, 6a) and prong recesses (5b, 6b) alternate beside one another, possibly in pairs, at each edge profile (5, 6), so that prongs (5a, 6a) of the one edge profile (5, 6) dip into prong recesses (5b, 6b) of the other edge profile (5, 6) and vice versa along the longitudinal separating line (4a, 4b).

3. The bearing according to claim 1 or 2, **characterised in that** the one edge profile (6) is equipped with webbed prongs (6a), whilst the other edge profile (5) comprises dovetailed prongs (5a).

4. The bearing according to any one of claims 1 to 3, **characterised in that** the webbed prongs (6a) dip into webbed-prong recesses (5b) running inclined with respect to the peripheral direction (U).

5. The bearing according to any one of claims 1 to 4, **characterised in that** the dovetailed prongs (5a) interact with U-shaped prong recesses (6b).

6. The bearing according to any one of claims 1 to 5, **characterised in that** the prongs (5a, 6a) each have rounded heads.

7. The bearing according to any one of claims 1 to 6, **characterised in that** the bearing bush (1) is designed double-shelled with an inner shell (1a) and an outer shell (1b), the two corresponding longitudinal separating lines (4a, 4b) being arranged non-overlapping with respect to one another in the radial direction (R).

8. The bearing according to any one of claims 1 to 7, **characterised in that** the bearing bush (1) is provided at its side facing the rubber body (2) with a coating.

9. The bearing according to any one of claims 1 to 8, **characterised in that** the bearing bush (1) is first pre-pressed to a predetermined diameter dimension and is then finally pressed.

10. The bearing according to any one of claims 1 to 9, **characterised in that** the edge profiles (5, 6) are provided with alternately overlapping prongs (7, 8).

## Revendications

1. Palier, en particulier palier en caoutchouc, comprenant au moins une douille de palier (1) et un corps en caoutchouc (2) entouré par la douille de palier (1), dans lequel la douille de palier (1) présente au moins une ligne de séparation longitudinale (4a, 4b) comportant des profilés d'arête (5, 6) prévus sur les arêtes longitudinales respectivement adjacentes et dont les dents (5a, 6a) ou les évidements à dent (5b, 6b) s'engagent l'un dans l'autre, **caractérisé en ce que** la dent respective (5a, 6a) sur la une arête longitudinale vient plonger dans un évidement à dent (5b, 6b) sur l'autre arête longitudinale dans le cadre de la fabrication et est alors déformée plastiquement selon une mesure prescrite.

2. Palier selon la revendication 1, **caractérisé en ce que**, sur chaque profilé d'arête (5, 6), des dents (5a, 6a) et des évidements à dent (5b, 6b) s'alternent l'un à côté de l'autre, le cas échéant par paire, de telle sorte que, le long de la ligne de séparation longitudinale (4a, 4b), des dents (5a, 6a) du un profilé d'arête (5, 6) vient plonger dans des évidements à dent (5b, 6b) de l'autre profilé d'arête (5, 6) et inversement.

3. Palier selon l'une ou l'autre des revendications 1 et 2, **caractérisé en ce que** le un profilé d'arête (6) est équipé de dents jumelées (6a) tandis que l'autre profilé d'arête (5) présente des dents en queue d'aronde (5a).

4. Palier selon l'une des revendications 1 à 3, **caractérisé en ce que** les dents jumelées (6a) viennent plonger dans des évidements à dents jumelées (5b) s'étendant en biais par rapport à la direction circonférentielle (U).

5. Palier selon l'une des revendications 1 à 4, **caractérisé en ce que** les dents en queue d'aronde (5a) sont en interaction avec des évidements à dent (6b) en forme de U.

6. Palier selon l'une des revendications 1 à 5, **caractérisé en ce que** les dents (5a, 6a) présentent respectivement des têtes arrondies.

7. Palier selon l'une des revendications 1 à 6, **caractérisé en ce que** la douille de palier (1) est exécutée en deux coques avec une coque intérieure (1a) et une coque extérieure (1 b), sachant que les deux lignes de séparation longitudinales correspondantes (4a, 4b) sont agencées en direction radiale (R) de manière à ne pas se chevaucher l'une l'autre.

8. Palier selon l'une des revendications 1 à 7, **caractérisé en ce que** la douille de palier (1) est équipée d'une enduction sur son côté tourné vers le corps en caoutchouc (2).

9. Palier selon l'une des revendications 1 à 8, **caractérisé en ce que** la douille de palier (1) est tout d'abord pré-pressée à une certaine mesure de diamètre et est ensuite pressée définitivement.

10. Palier selon l'une des revendications 1 à 9, **caractérisé en ce que** les profilés d'arête (5, 6) sont équipés de languettes (7, 8) qui se chevauchent en alternance.
